# EUROPÄISCHE PATENTANMELDUNG

(11) **EP 4 248 763 A1**
(43) Veröffentlichungstag der Anmeldung: **27.09.2023**
(21) Anmeldenummer: 23152524.7
(22) Anmeldetag: 19.01.2023
(51) Int. Cl.: A23L 29/262, A23P 20/10, A23C 19/068, A23C 19/086, A23L 27/00, A23D 9/007, A23C 19/09, A23D 7/005

(54) **LEBENSMITTELZUSAMMENSETZUNG ZUR HERSTELLUNG EINER GRATINIERTEN KRÄUTERKRUSTE**

(30) Priorität: 25.03.2022 DE 102022107165
(71) Anmelder: Mi. T Gastro Management GmbH, 4644 Scharnstein (AT)
(72) Erfinder: Süsser, Mike, 4644 Scharnstein (AT)
(74) Vertreter: Busse & Busse

(57) **Zusammenfassung**

Die Erfindung betrifft eine Lebensmittelzusammensetzung zur Herstellung einer gratinierten Kräuterkruste enthaltend eine Basismischung und eine Aroma- und/oder Geschmacksmischung, wobei die Basismischung ein Lebensmittelöl, Paniermehl, Hartkäse und eine Methylcellulose-Lösung enthält.

## Beschreibung

Die Erfindung betrifft eine Lebensmittelzusammensetzung zur Herstellung einer gratinierten Kräuterkruste.

Derartige Lebensmittelzusammensetzungen werden in der Praxis aus Butter, Semmelbrösel und Hartkäse unter Zusatz von Kräutern hergestellt. Die Zusammensetzung wird miteinander vermengt und ein Trägerlebensmittel, wie beispielsweise ein Stück Fleisch, Fisch oder auch Gemüse wird einseitig oder auch beidseitig in die Zusammensetzung eingelegt, so dass die Zusammensetzung an dem Trägerlebensmittel anhaftet. In der Praxis ist die Anhaftung jedoch oft unzureichend, so dass ein Teil der Lebensmittelzusammensetzung während der weiteren Zubereitung des Trägerlebensmittels unerwünscht von diesem abfällt. Auch wurde beobachtet, dass die gratinierte Kräuterkruste nach der Zubereitung entweder nicht knusprig ist oder eine brüchige Konsistenz dergestalt aufweist, dass sie beim Anschneiden der mit der Kräuterkruste belegten Trägerlebensmittel zerspringt und abplatzt. Die vorgenannten Probleme bestehen nicht nur bei der Zubereitung einer Kräuterkruste für ein Trägerlebensmittel durch Privatpersonen, sondern auch in vielen Restaurants und bei industriell hergestellten Trägerlebensmitteln mit derartigen Kräuterkrusten.

Der Erfindung liegt die Aufgabe zugrunde, eine Lebensmittelzusammensetzung zur Herstellung einer gratinierten Kräuterkruste für ein Trägerlebensmittel bereitzustellen, bei der die vorgenannten Probleme reduziert sind.

Diese Aufgabe wird erfindungsgemäß durch eine Lebensmittelzusammensetzung zur Herstellung einer gratinierten Kräuterkruste gelöst, die eine Basismischung und eine Aroma- und/oder Geschmacksmischung enthält, wobei die Basismischung ein Lebensmittelöl, Paniermehl, Hartkäse und eine Methylcellulose-Lösung enthält. Aufgrund der in der Lebensmittelzusammensetzung enthaltenen Basismischung haftet die Lebensmittelzusammensetzung unerwartet gut an dem Trägerlebensmittel, wie Fleisch, Fisch oder Gemüse. Darüber hinaus konnte überraschenderweise beobachtet werden, dass die Krustenmasse bei einem Zerschneiden nur wenig vom Trägerlebensmittel absplittert, gleichzeitig aber knusprig ist. Die Methylcellulose-Lösung wirkt in der Basismischung als Geliermittel. Methylcellulose hat dabei den besonderen Vorteil, in Lösungen im Erwärmungsprozess zu gelieren, wobei die Methylcellulose-Lösung und damit angerührte Massen während der anschließenden Abkühlung wieder zähflüssig werden. Methylcellulose ist ein Lebensmittelzusatzstoff mit der E-Nr. 461. Mit Vorteil ist die Lebensmittelzusammensetzung frei von weiteren Geliermittel wie Xanthan, Carrageen, Pektin und/oder Agar-Agar.

In einer vorteilhaften Ausgestaltung der Erfindung ist die Basismischung in einem Anteil von wenigstens 85 Gew.-%, bevorzugt in einem Anteil von 90 Gew.-% und besonders bevorzugt in einem Anteil von 95 Gew.-% bezogen auf die Lebensmittelzusammensetzung enthalten. Es hat sich überraschenderweise gezeigt, dass diese Anteile der Basismischung an der Lebensmittelzusammensetzung dazu führen, dass die mit der Lebensmittelzusammensetzung hergestellte Kräuterkruste besonders gut an dem Trägerlebensmittel anhaftet und die gratinierten Kräuterkruste einerseits knusprig wird, sich aber dennoch gut schneiden lässt.

Mit Vorteil ist das Lebensmittelöl in einem Anteil von 35 bis 55 Gew.-%, bevorzugt von 40 bis 50 Gew.-% und besonders bevorzugt von 43 bis 47 Gew.-% bezogen auf die Basismischung enthalten. Es hat sich überraschenderweise herausgestellt, dass gerade diese Anteile dazu führen, dass die mit der Lebensmittelzusammensetzung hergestellte Kräuterkruste gut an dem Trägerlebensmittel haftet und die Kräuterkruste einerseits ausreichend knusprig ist, andererseits aber auch gut schneidbar im gratinierten Zustand.

In einer vorteilhaften Ausgestaltung der Erfindung ist das Paniermehl in einem Anteil von 16 bis 30 Gew.-%, bevorzugt von 16 bis 25 Gew.-% und besonders bevorzugt von 17 bis 20 Gew.-% bezogen auf die Basismischung enthalten. Auch hier hat sich überraschenderweise herausgestellt, dass gerade diese Anteile dazu führen, dass die mit der Lebensmittelzusammensetzung hergestellte Kräuterkruste gut an dem Trägerlebensmittel haftet und die Kräuterkruste einerseits ausreichend knusprig ist, andererseits aber auch gut schneidbar im gratinierten Zustand.

Mit Vorteil ist der Hartkäse in einem Anteil von 15 bis 19,5 Gew.-%, bevorzugt 17 bis 19 Gew.-% und besonders bevorzugt von 17,5 bis 18,5 Gew.-% bezogen auf die Basismischung enthalten. In Versuchen hat sich herausgestellt, dass gerade diese Anteile dazu führen, dass die mit der Lebensmittelzusammensetzung hergestellte Kräuterkruste gut an dem Trägerlebensmittel haftet und die Kräuterkruste einerseits ausreichend knusprig ist, andererseits aber auch gut schneidbar im gratinierten Zustand.

In einer besonders bevorzugten Ausgestaltung der Erfindung ist die Methylcellulose-Lösung in einem Anteil von 15 bis 21 Gew.-%, bevorzugt von 16 bis 20 Gew.-% und besonders bevorzugt von 17,5 bis 19 Gew.-% bezogen auf die Basismischung enthalten. Es hat sich überraschenderweise herausgestellt, dass gerade diese Anteile dazu führen, dass die mit der Lebensmittelzusammensetzung hergestellte Kräuterkruste gut an dem Trägerlebensmittel haftet und die Kräuterkruste einerseits ausreichend knusprig ist andererseits aber auch gut schneidbar im gratinierten Zustand.

Die Methylcellulose-Lösung ist bevorzugt in Wasser gelöste Methylcellulose mit gelartiger Konsistenz. Unabhängig hiervon beträgt der Anteil an Methylcellulose in der Methylcellulose-Lösung mit Vorteil 2,5 bis 3,5 Gew.-%, bevorzugt 2,7 bis 3,3 Gew.-% und besonders bevorzugt 2,9 bis 3,1 Gew.-%. In Versuchen hat sich überraschenderweise gezeigt, dass gerade diese Anteile an der Methylcellulose in der Methylcellulose-Lösung eine besonders gute Haftung der Lebensmittelzusammensetzung an dem Trägerlebensmittel bewirkt und zudem die gratinierte Kräuterkruste gut zu schneiden aber auch ausreichend knusprig ist.

Mit Vorteil überschreitet die Summe der Anteile an Lebensmittelöl, Methylcellulose-Lösung, Paniermehl und Hartkäse nicht einen Wert von 100 Gew.-% bezogen auf die Basismischung. Dies ist für sich genommen zwar eine Selbstständigkeit, wird zur Klarheit aber ausdrücklich benannt.

In einer vorteilhaften Ausgestaltung der Erfindung ist die Basismischung außer dem Lebensmittelöl, Paniermehl, Hartkäse und der Methylcellulose-Lösung frei von weiteren Zutaten.

Mit Vorteil beträgt die Summe der Anteile an Lebensmittelöl und Hartkäse bezogen auf die Basismischung nicht mehr als 65 Gew.-%. In Versuchen hat sich herausgestellt, dass der Fettgehalt der Lebensmittelzusammensetzung anderenfalls zu hoch wird und die gratinierte Kräuterkruste an Knusprigkeit einbüßt.

Das Paniermehl ist in einer bevorzugten Ausgestaltung der Erfindung von Semmelbröseln gebildet.

Mit Vorteil hat der Hartkäse einen Wasseranteil von weniger als 50 Gew.-%. Es handelt sich damit um einen Extrahartkäse. Besonders bevorzugt wird der Hartkäse von einem Parmesan-Käse gebildet.

Die Methylcellulose-Lösung wird mit Vorteil dergestalt hergestellt, dass Wasser auf eine Temperatur zwischen 70 °C und 90 °C erhitzt und danach mit Methylcellulose (E 461) im Verhältnis 33,3:1 solange vermixt wird, bis die Methylcellulose aufgelöst ist. Dies dauert je nach Temperatur etwa 30 Sekunden bis 5 Minuten. Anschließend wird der vorgenannte Ansatz mindestens 10 Stunden bei 2 °C bis 4 °C gelagert. Bevorzugt wird der Ansatz danach noch einmal miteinander vermixt, wobei der Ansatz besonders bevorzugt für wenigstens 20 Sekunden in einem Mixgerät bei einer Drehgeschwindigkeit des Mixorgans von wenigstens 10.000 U/min vermengt wird.

Die Basismischung wird besonders bevorzugt dergestalt hergestellt, dass die Methylcellulose-Lösung zunächst mit dem Lebensmittelöl zu einer Emulsion vermengt wird. Anschließend werden der Emulsion die weiteren Komponenten der Basismischung zugegeben und diese dann zu einer homogenen Masse verrührt.

Die Aroma- und Geschmacksmischung ist in einer bevorzugten Ausgestaltung der Erfindung frei von den vorgenannten Komponenten der Basismischung. Die Aroma- und Geschmacksmischung enthält mit Vorteil überwiegend Kräuter, Gewürze, Gemüse und/oder Salz. Besonders bevorzugt enthält die Aroma- und Geschmacksmischung außer Kräutern, Gewürzen, Gemüse und/oder Salz keine weiteren Zutaten.

Mit Vorteil ist das Lebensmittelöl ein Rapsöl. Dieses hat sich als besonders geeignet herausgestellt.

Nachfolgend wird ein Ausführungsbeispiel einer erfindungsgemäßen Lebensmittelzusammensetzung sowie deren Herstellung näher beschrieben:
Wasser wird auf 80 °C erhitzt und danach mit Methylcellulose (E461) im Verhältnis 33,3:1 eine Minute lang vermixt. Dieser Ansatz wird anschließend für mindestens 12 Stunden bei 2 °C bis 4 °C gelagert. Danach wird der Ansatz in einem Mixer für 30 Sekunden gemixt, wobei das Mixorgan des Mixers eine Drehgeschwindigkeit von 12.000 U/min hat. 182 g dieser hergestellten Methylcellulose-Lösung wird danach mit 455 g Rapsöl als Lebensmittelöl zu einer Emulsion verrührt. Der Emulsion werden anschließend 182 g Samplebrösel und 181 g Parmesan beigemengt und die so hergestellte Basismischung zu einer homogenen Masse verrührt. Dieser Basismischung wird dann zur Herstellung der Lebensmittelzusammensetzung eine Aroma- und Geschmacksmischung in Form von Kräutern und Gewürzen beigemengt, wobei der Anteil der Basismischung an der Lebensmittelzusammensetzung 95 Gew.-% beträgt.

Ein Stück Fleisch, ein Stück Fisch und ein Stück Gemüse werden als Trägerlebensmittel nacheinander in die so hergestellte Lebensmittelzusammensetzung gelegt. Die Lebensmittelzusammensetzung haftet jeweils anschließend sehr gut an den vorgenannten Trägerlebensmitteln. Die Trägerlebensmittel mit der anhaftenden Lebensmittelzusammensetzung werden anschließend in einer Pfanne mit etwas Öl erhitzt. Es bildet sich aus der Lebensmittelzusammensetzung eine gratinierten Kräuterkruste. Diese haftet ebenfalls gut an dem jeweiligen Trägerlebensmittel, ist knusprig und kann gut zusammen mit dem Trägerlebensmittel zerschnitten werden, ohne dass inakzeptable Mengen der Kräuterkruste vom Trägerlebensmittel abspringen.

## Patentansprüche

1. Lebensmittelzusammensetzung zur Herstellung einer gratinierten Kräuterkruste enthaltend eine Basismischung und eine Aroma- und/oder Geschmacksmischung, wobei die Basismischung ein Lebensmittelöl, Paniermehl, Hartkäse und eine Methylcellulose-Lösung enthält.

2. Lebensmittelzusammensetzung nach Anspruch 1, **dadurch gekennzeichnet, dass** die Basismischung in einem Anteil von wenigstens 85 Gew.-%, bevorzugt in einem Anteil von 90 Gew.-% und besonders bevorzugt in einem Anteil von 95 Gew.-% bezogen auf die Lebensmittelzusammensetzung enthalten ist.

3. Lebensmittelzusammensetzung nach einem der vorhergehenden Ansprüche, **dadurch gekennzeichnet, dass** das Lebensmittelöl in einem Anteil von 35 bis 55 Gew.-%, bevorzugt von 40 bis 50 Gew.-% und besonders bevorzugt von 43 bis 47 Gew.-% bezogen auf die Basismischung enthalten ist.

4. Lebensmittelzusammensetzung nach einem der vorhergehenden Ansprüche, **dadurch gekennzeichnet, dass** das Paniermehl in einem Anteil von 16 bis 30 Gew.-%, bevorzugt von 16 bis 25 Gew.-% und besonders bevorzugt von 17 bis 20 Gew.-% bezogen auf die Basismischung enthalten ist.

5. Lebensmittelzusammensetzung nach einem der vorhergehenden Ansprüche, **dadurch gekennzeichnet, dass** der Hartkäse in einem Anteil von 15 bis 19,5 Gew.-%, bevorzugt 17 bis 19 Gew.-% und besonders bevorzugt von 17,5 bis 18,5 Gew.-% bezogen auf die Basismischung enthalten ist.

6. Lebensmittelzusammensetzung nach einem der vorhergehenden Ansprüche, **dadurch gekennzeichnet, dass** die Methylcellulose-Lösung in einem Anteil von 15 bis 21 Gew.-%, bevorzugt von 16 bis 20 Gew.-% und besonders bevorzugt von 17,5 bis 19 Gew.-% bezogen auf die Basismischung enthalten ist.

7. Lebensmittelzusammensetzung nach einem der vorhergehenden Ansprüche, **dadurch gekennzeichnet, dass** die Methylcellulose-Lösung in Wasser gelöste Methylcellulose mit gelartiger Konsistenz ist.

8. Lebensmittelzusammensetzung nach einem der vorhergehenden Ansprüche, **dadurch gekennzeichnet, dass** der Anteil an Methylcellulose in der Methylcellulose-Lösung 2,5 bis 3,5 Gew.-% und bevorzugt 2,7 bis 3,3 Gew.-% und besonders bevorzugt 2,9 bis 3,1 Gew.-% beträgt.

9. Lebensmittelzusammensetzung nach einem der vorhergehenden Ansprüche, **dadurch gekennzeichnet, dass** die Summe der Anteile an Lebensmittelöl, Methylcellulose-Lösung, Paniermehl und Hartkäse einen Wert von 100 Gew.-% bezogen auf die Basismischung nicht überschreitet.

10. Lebensmittelzusammensetzung nach einem der vorhergehenden Ansprüche, **dadurch gekennzeichnet, dass** die Basismischung außer dem Lebensmittelöl, Paniermehl, Hartkäse und der Methylcellulose-Lösung frei von weiteren Zutaten ist.

11. Lebensmittelzusammensetzung nach einem der vorhergehenden Ansprüche, **dadurch gekennzeichnet, dass** die Summe der Anteile an Lebensmittelöl und Hartkäse bezogen auf die Basismischung nicht mehr als 65 Gew.-% beträgt.

12. Lebensmittelzusammensetzung nach einem der vorhergehenden Ansprüche, **dadurch gekennzeichnet, dass** das Paniermehl von Semmelbröseln gebildet ist.

13. Lebensmittelzusammensetzung nach einem der vorhergehenden Ansprüche, **dadurch gekennzeichnet, dass** der Hartkäse einen Wasseranteil von weniger als 50 Gew.-% hat.

14. Lebensmittelzusammensetzung nach einem der vorhergehenden Ansprüche, **dadurch gekennzeichnet, dass** der Hartkäse ein Parmesan-Käse ist.

15. Lebensmittelzusammensetzung nach einem der vorhergehenden Ansprüche, **dadurch gekennzeichnet, dass** die Aroma- und Geschmacksmischung überwiegend Kräuter, Gewürze, Gemüse und/oder Salz enthält und besonders bevorzugt frei von weiteren Zutaten ist.
